Europäisches Patentamt

European Patent Office

Office européen des brevets

(11) Veröffentlichungsnummer: **0 355 678**
A2

## (12) EUROPÄISCHE PATENTANMELDUNG

(21) Anmeldenummer: 89115068.2

(22) Anmeldetag: 16.08.89

(51) Int. Cl.⁴ **B23G 5/20**

(30) Priorität: 25.08.88 DE 3828780

(43) Veröffentlichungstag der Anmeldung:
28.02.90 Patentblatt 90/09

(84) Benannte Vertragsstaaten:
AT BE CH DE ES FR GB GR IT LI LU NL SE

(71) Anmelder: **Schmitt, Norbert M., Dr.**
**Schwalbenweg 3**
**D-8501 Feucht(DE)**

(72) Erfinder: **Der Erfinder hat auf seine Nennung**
**verzichtet**

(74) Vertreter: **Böhme, Volker, Dipl.-Ing. et al**
**Patentanwälte Dipl.-Ing. E. Kessel Dipl.Ing. V.**
**Böhme Karolinenstrasse 27**
**D-8500 Nürnberg 1(DE)**

(54) **Bohrgewindefräser.**

(57) Es gibt einen Bohrgewindefräser, der an einem vorderen Ende 7 mindestens eine Stirnschneide 8 zur Erzeugung eines Kernloches und dahinter steigungsfreie Gewindefräszähne 4 zur Erzeugung von Gewindegängen aufweist und für den axiale Bewegung, Rotation um die eigene Achse sowie eine Wendelbewegung vorgesehen sind. Dabei ist es erwünscht, wenn durch nur ein Werkzeug Kernlöcher verschiedenen Durchmessers im wesentlichen mit der Stirnschneide erzeugbar sind. Dies ist erreicht, indem der Außendurchmesser der Stirnschneide 8 gleich dem oder kleiner als der Kerndurchmesser der Gewindefräszähne 4 ist, indem die Zahl der in axialer Richtung hintereinander angeordneten Gewindefräszähne 4 kleiner ist als die Zahl der zu erzeugenden Gewindegänge, indem gleichzeitige Erzeugung von Kernloch und Gewindegängen vorgesehen ist und indem die der Gewindegänge-Erzeugung dienende Wendelbewegung eine der Zahl der zu erzeugenden Gewindegänge entsprechende Umlaufzahl aufweist. Der Bohrgewindefräser läßt es zu, mit derselben Stirnschneide Kernlöcher verschiedenen Durchmessers zu erzeugen, da die Erzeugung des Kernloches während der Wendelbewegung erfolgt.

Fig. 1

## Bohrgewindefräser

Die Erfindung betrifft einen Bohrgewindefräser, der an einem vorderen Ende mindestens eine Stirnschneide zur Erzeugung eines Kernloches und dahinter steigungsfreie Gewindefräszähne zur Erzeugung von Gewindegängen aufweist und für den axiale Bewegung, Rotation um die eigene Achse sowie eine Wendelbewegung vorgesehen sind.

Bei einem bekannten (internationale OS WO 87 05546) Bohrgewindefräser dieser Art ist der Außendurchmesser der Stirnschneide gleich dem oder größer als der Außendurchmesser der Gewindefräszähne, ist die Zahl der in axialer Richtung hintereinander angeordneten Gewindefräszähne mindestens gleich der Zahl der zu erzeugenden Gewindegänge, ist zunächst die Erzeugung des Kernloches und daran anschließend die Erzeugung der Gewindegänge vorgesehen und weist die Wendelbewegung nur etwa einen Umlauf, d.h. weniger als zwei Umläufe auf. Mit dem bekannten Bohrgewindefräser wird eine Gewindebohrung hergestellt, deren Kernlochdurchmesser gleich dem Außendurchmesser der Stirnschneide ist. Wenn man Kernlöcher verschieden großer Durchmesser mittels Stirnschneide herstellen will, so muß man verschiedene Bohrgewindefräser mit entsprechenden Stirnschneide-Durchmessern bereithalten und an der Werkzeugmaschine auswechseln, an welcher der Bohrgewindefräser verwendet wird.

Eine Aufgabe der Erfindung ist es daher, einen Bohrgewindefräser der eingangs genannten Art zu schaffen, der es zuläßt, durch nur ein Werkzeug Kernlöcher verschiedenen Durchmessers im wesentlichen mit der Stirnschneide zu erzeugen. Der erfindungsgemäße Bohrgewindefräser ist, diese Aufgabe lösend, dadurch gekennzeichnet, daß der Außendurchmesser der Stirn schneide gleich dem oder kleiner als der Kerndurchmesser der Gewindefräszähne ist, daß die Zahl der in axialer Richtung hintereinander angeordneten Gewindefräszähne kleiner ist als die Zahl der zu erzeugenden Gewindegänge, daß gleichzeitige Erzeugung von Kernloch und Gewindegängen vorgesehen ist und daß die der Gewindegänge-Erzeugung dienende Wendelbewegung eine der Zahl der zu erzeugenden Gewindegänge entsprechende Umlaufzahl aufweist.

Der erfindungsgemäße Bohrgewindefräser, der durch seine Gestalt und seine Bewegung bei der Erzeugung einer Gewindebohrung gekennzeichnet ist, läßt es zu, mit derselben Stirnschneide Kernlöcher verschiedenen Durchmessers zu erzeugen, da die Erzeugung des Kernloches während der Wendelbewegung erfolgt, die der Erzeugung der Gewindegänge dient. Ohne Wechsel des Werkzeuges ist es möglich, nacheinander zwei Gewindelöcher verschieden großen Kerndurchmessers zu erzeugen, was mit einer Zeitersparnis verbunden ist. Das Kernloch wird im wesentlichen von der mindestens einen Stirnschneide erzeugt, die hinsichtlich Festigkeit besser für die Bearbeitung des Kernlochmaterials ausgelegt ist als die Gewindefräszähne. Der erfindungsgemäße Bohrgewindefräser kommt mit einer verringerten Zahl von axial hintereinander angeordneten Gewindefräszähnen aus und ist daher im Aufbau vereinfacht sowie in der Profillänge verkürzt.

Wenn der Außendurchmesser der an der Stirnfläche liegenden Stirnschneide kleiner als der Kerndurchmesser der Gewindefräszähne ist, dann wird auch Kernlochmaterial mittels Schneide an einer Stufe zum vorderen Gewindefräszahn entfernt. In der Regel ist der Außendurchmesser der Stirnschneide gleich dem Kerndurchmesser der Gewindefräszähne.

Wenn der erfindungsgemäße Bohrgewindefräser zwei oder mehr axial hintereinander angeordnete, gleich ausgebildete Gewindefräszähne aufweist, so wird bei der Erzeugung der Gewindegänge nur der vorderste Gewindefräszahn belastet. Besonders zweckmäßig und vorteilhaft ist es daher, wenn vordere axial hintereinander angeordnete Gewindefräszähne mit einem Anschnitt versehen sind. Wie bei einem Gewindebohrer sind mehrere vordere Gewindefräszähne an der Erzeugung der Gewindegänge beteiligt.

Der erfindungsgemäße Bohrgewindefräser hat in der Regel zwei Stirnschneiden, von denen z.B. die eine vor der Mittelachse endet und die andere sich über die Mittelachse hinaus erstreckt. Es können u.a. mehr als zwei oder nur eine Stirnschneide vorgesehen sein. Die Stirnschneide verläuft z.B. in einer zur Mittelachse rechtwinkeligen Ebene; es ist auch ein spitzer Verlauf des freien Endes des Bohrgewindefräsers denkbar.

Die Rotation des Bohrgewindefräsers um die eigene Achse ist so groß, daß die Stirnschneide bzw. der Gewindefräszahn den Gewindegang trotz der Wendelbewegung schneidet bzw. spant. Wenn der Bohrgewindefräser bei der Wendelbewegung einen Kreis von 360° durchläuft, so wird er um eine 360°-Steigung der Wendel der Gewindegänge in axialer Richtung vorgeschoben; d.h. der Vorschub des Bohrgewindefräsers entspricht der Steigung des zu erzeugenden Gewindes.

Der Durchmesser des mit der Stirnschneide bei einem Arbeitsgang zu erzeugenden Kernloches kann bis zu zweimal so groß wie der Durchmesser der Stirnschneide sein. Man kann u.U. auch zu einem zweiten Arbeitsgang ansetzen und mit einem vergrößerten Radius der Wendelbewegung erneut Kernlochmaterial unter Erzeugung von Gewindegängen entfernen. Wenn man bei einem ersten Arbeitsgang den Durchmesser der Wendelbewegung größer als das Doppelte des Durchmessers der Stirnschneide wählt, so bleibt mittig ein mit Außengewinde versehener Zapfen stehen, wobei trotzdem das Innengewinde der Bohrung erzeugt wird.

Für den erfindungsgemäßen Bohrgewindefräser wird eine mechanisch gesteuerte Werkzeugmaschine oder in der Regel eine NC-gesteuerte Werkzeugmaschine verwendet, die eine Drei-Achsen-Steuerung aufweist und ein wendel- bzw. schraubenförmiges Eintauchen des Werkzeuges in das Werkstück ermöglicht, wobei eine Kreisbewegung sowie eine axiale Vorschubbewegung einander überlagert werden. Am Beginn des Eintauchens ist nur die Stirnschneide wirksam. Sobald diese in das Werkstück eingetaucht ist, wird zusätzlich der Gewindefräszahn wirksam. Die Wendelbewegung umfaßt mindestens soviele Umläufe wie Gewindegänge zu erzeugen sind. Wenn das Gewindeloch erzeugt ist, fährt der Bohrgewindefräser auf die Mittellinie des Gewindeloches und wird zurückgezogen.

In der Zeichnung sind bevorzugte Ausführungsformen der Erfindung dargestellt und zeigt

Fig. 1 eine Seitenansicht eines Bohrgewindefräsers,

Fig. 2 eine Stirnansicht des Bohrgewindefräsers gemäß Fig. 1,

Fig. 3 eine weitere Seitenansicht des Bohrgewindefräsers gemäß Fig. 1,

Fig. 4 einen Längsschnitt eines Teiles des Bohrgewindefräsers gemäß Fig. 1 in einem gegenüber Fig. 1 vergrößerten Maßstab und

Fig. 5 einen Längsschnitt eines Teiles eines weiteren Bohrgewindefräsers.

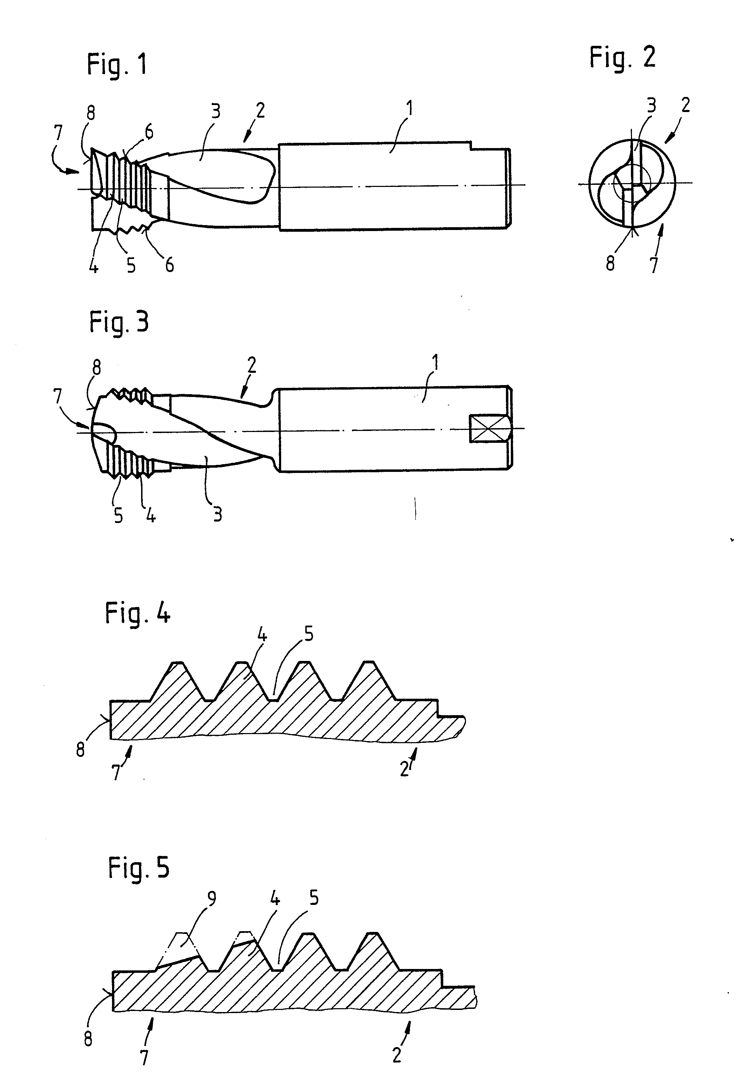

Der Bohrgewindefräser gemäß Fig. 1 - 4 weist hinten einen Aufnahmeschaft 1 zum Einsatz in ein Spannwerkzeug an einer Werkzeugspindel einer Werkzeugmaschine auf. An den Aufnahmeschaft 1 schließt sich nach vorne hin ein Fräsbereich 2 an, der mit zwei Drallnuten 3 versehen ist und zwei Reihen von hintereinander angeordneten vier Gewindezähnen 4 aufweist, wobei die Reihen in axialer Richtung oder besser in Drallrichtung verlaufen. Die Gewindefräszähne 4 begrenzen zwischen sich je eine Nut 5 und bilden Gewindefrässchneiden 6. Der Bohrgewindefräser läuft nach vorne hin in einem Endstück 7 aus, das mit Stirnschneiden 8 versehen ist, die einerseits in einer zur Mittelachse rechtwinkeligen Ebene verlaufen und dann nach einer spitzen Abknickung in einer Mantelfläche in Mantelschneiden übergehen, die bei der Erzeugung des Kernloches ebenfalls mitwirken.

Gemäß Fig. 4 sind die in einer Reihe angeordneten Gewindefräszähne 4 gleichgroß. Da nur der vorderste Zahn Zerspanungsarbeit leistet, dienen die übrigen Zähne nur der Führung. Wenn der vordere Zahn abgenutzt ist, kann er weggeschliffen werden, wonach der in der Reihe nachfolgende Zahn die Zerspanungsarbeit zu leisten hat. Gemäß Fig. 5 ist ein sich auf die ersten zwei Gewindefräszähne 4 erstreckender Anschnitt 9 vorgesehen, so daß drei Zähne 8 der Reihe die Zerspanungsarbeit zur Erzeugung eines Gewindeganges zu leisten haben.

## Ansprüche

1. Bohrgewindefräser, der an einem vorderen Ende mindestens eine Stirnschneide zur Erzeugung eines Kernloches und dahinter steigungsfreie Gewindefräszähne zur Erzeugung von Gewindegängen aufweist und für den axiale Bewegung, Rotation um die eigene Achse sowie eine Wendelbewegung vorgesehen sind, **dadurch gekennzeichnet,** daß der Außendurchmesser der Stirnschneide (8) gleich dem oder kleiner als der Kerndurchmesser der Gewindefräszähne (4) ist, daß die Zahl der in axialer Richtung hintereinander angeordneten Gewindefräszähne (4) kleiner ist als die Zahl der zu erzeugenden Gewindegänge, daß gleichzeitige Erzeugung von Kernloch und Gewindegängen vorgesehen ist und daß die der Gewindegängen-Erzeugung dienende Wendelbewegung eine der Zahl der zu erzeugenden Gewindegängen entsprechende Umlaufzahl aufweist.

2. Bohrgewindefräser nach Anspruch 1, **dadurch gekennzeichnet,** daß vordere axial hintereinander angeordnete Gewindefräszähne (4) mit einem Anschnitt (9) versehen sind.

EP 0 355 678 A2

Fig. 1

Fig. 2

Fig. 3

Fig. 4

Fig. 5